# FASCICULE DE BREVET EUROPEEN

(11) **EP 0 779 868 B1**
(45) Date de publication et mention de la délivrance du brevet: **16.12.1998**
(21) Numéro de dépôt: 95927790.6
(22) Date de dépôt: 17.08.1995
(51) Int. Cl.: B60T 13/565

(54) **DISPOSITIF DE FREINAGE ASSISTE A COURSE MASQUEE ET A SECURITE ACCRUE**
BREMSANLAGE MIT ERHÖHTER SICHERHEIT
PROTECTED-TRAVEL IMPROVED-SAFETY POWER-ASSISTED BRAKE DEVICE

(30) Priorité: 08.09.1994 FR 9410729
(43) Date de publication de la demande: 25.06.1997
(73) Titulaire: Bosch Systemes de Freinage, 93700 Drancy (FR)
(72) Inventeur: CASTEL, Philippe, F-75005 Paris (FR); CASTELLO, Olivier, F-93140 Bondy (FR); LEVRAI, Roland, F-93240 Stains (FR)
(74) Mandataire: Bentz, Jean-Paul
(86) Numéro de dépôt international: FR9501088
(87) Numéro de publication internationale: WO9607572

(56) Documents cités:
- EP-A- 0 257 360
- WO-A-94/07723
- WO-A-94/16927

## Description

La présente invention concerne un dispositif de freinage assisté pour véhicule à moteur, comprenant d'une part un maître-cylindre doté de circuits primaire et secondaire remplis d'un fluide de freinage, et équipé de pistons hydrauliques primaire et secondaire destinés à recevoir une force d'actionnement se composant d'une force d'entrée et d'une force d'assistance agissant toutes deux suivant une direction axiale, et d'autre part un servomoteur pneumatique d'assistance susceptible d'être commandé par application de ladite force d'entrée sur une tige de commande contrôlant l'ouverture d'un clapet, pour exercer ladite force d'actionnement sur le piston hydraulique primaire qui en transmet une partie au piston hydraulique secondaire, le servomoteur comportant une enveloppe rigide séparée de façon étanche en deux chambres au moyen au moins d'une cloison mobile, susceptible d'être sollicitée par une différence de pression entre les deux chambres résultant de l'ouverture du clapet et d'entraîner un piston pneumatique, mobile par rapport à l'enveloppe et portant ledit clapet, ladite force d'entrée étant transmise par l'intermédiaire d'un disque de réaction sur lequel s'appuie également ledit piston pneumatique pour lui fournir une partie au moins de ladite force d'assistance, le piston hydraulique primaire du maître-cylindre comportant lui-même un cylindre mobile, creux, qui communique avec le circuit primaire du maître-cylindre, qui coopère avec la cloison mobile pour recevoir une partie au moins de la force d'assistance communiquée par cette dernière, et à l'intérieur duquel coulisse, de façon étanche et suivant la direction axiale, un piston hydraulique auxiliaire susceptible de recevoir au moins ladite force d'entrée en provenance du disque de réaction, et la cloison mobile étant montée coulissante sur le piston pneumatique de manière à pouvoir coulisser par rapport à lui, sur une course prédéterminée, pour entraîner le cylindre mobile en direction du maître-cylindre.

Un dispositif de ce type a été proposé récemment et se trouve notamment décrit dans la demande de brevet international publiée sous le numéro WO 94/07723.

Un tel dispositif de freinage présente l'avantage de conduire à une optimisation du contrôle qu'exerce le conducteur sur la décélération du véhicule qu'il conduit, en lui permettant d'appliquer un effort de freinage croissant de façon beaucoup plus régulière, en fonction de la course de la pédale de frein, que dans les dispositifs antérieurs.

Cependant, un tel dispositif est difficile à immuniser contre des conséquences négatives d'une éventuelle défaillance du circuit primaire de freinage, et le but de l'invention est précisément de proposer une évolution de ce dispositif qui résolve ce problème.

A cette fin, le dispositif de la présente invention, par ailleurs conforme à la définition qui en est donnée dans le préambule ci-dessus, est essentiellement caractérisé en ce que le piston hydraulique auxiliaire comprend une partie avant et une partie arrière, la partie avant dépassant du cylindre mobile et étant susceptible d'entraîner mécaniquement le piston hydraulique secondaire en cas de défaillance du circuit primaire.

Bien que les parties avant et arrière du piston hydraulique auxiliaire puissent être solidaires l'une de l'autre et former un ensemble monobloc, il est avantageux que la partie avant soit creuse et coulisse par rapport à la partie arrière.

En outre, selon un mode de réalisation préféré de l'invention, le cylindre mobile présente un volume interne communiquant avec le circuit primaire du maître-cylindre au moins à travers une ouverture radiale de la partie avant, cette ouverture radiale étant sélectivement obturée par un joint annulaire lors de l'application d'un épaulement annulaire de la partie avant sur une extrémité du cylindre mobile, sous l'effet d'un premier ressort sollicitant cette partie avant en direction inverse de la direction axiale.

Enfin, il est possible de prévoir que le volume interne du cylindre mobile communique également avec le circuit primaire du maître-cylindre à travers au moins un clapet anti-retour porté axialement par la partie avant du piston hydraulique auxiliaire.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en coupe d'un dispositif de l'art antérieur, tel qu'illustré par la demande de brevet international publiée sous le numéro WO 94/07723; et
- Les figures 2 à 5 sont des vues en coupe partielles d'un dispositif conforme à l'invention, observé à des stades de fonctionnement différents.

Dans la mesure où l'invention ne concerne qu'un perfectionnement apporté aux systèmes de freinage à assistance pneumatique, et où la constitution générale et le fonctionnement de ces derniers sont bien connus de l'homme de l'art notamment par la demande de brevet international publiée sous le numéro WO 94/07723, ces systèmes ne seront rapidement rappelés ici que pour permettre une compréhension totale du perfectionnement que représente l'invention.

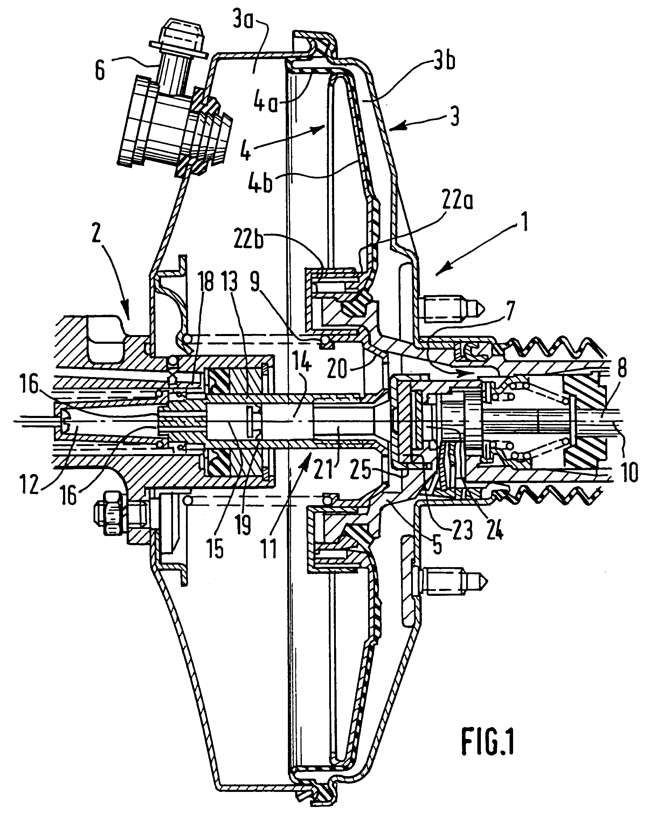

Schématiquement (figure 1), un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers un clapet anti-retour 6.

La pression dans la chambre arrière 3b est contrôlée par un clapet 7, commandé par une tige de commande 8, laquelle est reliée à une pédale de frein (non représentée).

Lorsque la tige de commande 8 est en position de repos, en l'occurrence tirée vers la droite, le clapet 7 établit normalement une communication entre les deux chambres 3a et 3b du servomoteur.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres, alors ressentie par la membrane 4a, exerce sur la cloison mobile 4 une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant l'axe 10 de la tige de poussée 8 en direction du maître-cylindre 2, et se conjuguent pour constituer la force d'actionnement de ce dernier.

Plus précisément, la force d'actionnement est appliquée sur le piston hydraulique primaire 11 du maître-cylindre et en provoque le déplacement vers la gauche (sur la figure), ce qui entraîne une élévation de pression du liquide de freinage présent dans le volume intérieur 12 du circuit primaire du maître-cylindre, et un actionnement du frein relié à ce dernier.

Le piston hydraulique primaire 11 est en fait composite et comprend d'une part un cylindre 13 mobile et creux, et d'autre part un piston hydraulique auxiliaire 14.

Le volume intérieur 15 du cylindre mobile 13 communique avec le volume intérieur 12 du maître-cylindre par l'intermédiaire d'orifices, tels que 16, ménagés suivant une direction axiale.

En dehors du passage de fluide que permettent ces passages 16 entre le volume intérieur 12 du maître-cylindre 2 et celui du cylindre mobile 13, ce cylindre mobile 13 coulisse de façon étanche dans le maître-cylindre 2, l'étanchéité étant obtenue grâce au moins à un joint annulaire 18.

Le piston hydraulique auxiliaire 14, quant à lui, coulisse à l'intérieur du cylindre mobile 13, qu'il obture de façon étanche grâce à un joint annulaire 19.

Le cylindre mobile 13 est relié, à travers la bague 20, à la jupe rigide 4b de manière à recevoir une partie au moins de la force d'assistance exercée par l'intermédiaire de cette jupe.

Le piston hydraulique auxiliaire 14 constitue en fait le prolongement axial d'une tige de poussée 21 susceptible de lui transmettre d'une part la force d'entrée exercée sur la tige de commande 8 et d'autre part une fraction de la force d'assistance développée par le piston pneumatique 5, ces forces étant transmises par l'intermédiaire d'un disque de réaction 23 sur une face duquel s'appuient ce piston pneumatique et un palpeur 24 actionné par la tige de commande, et dont l'autre face s'appuie sur une coupelle 25 solidaire de la tige de poussée 21.

Le fonctionnement du dispositif décrit jusqu'à présent est le suivant.

Lorsqu'une force d'entrée est appliquée sur la tige de commande 8, le piston hydraulique auxiliaire 14 est sollicité vers la gauche, tendant à entraîner le cylindre mobile et/ou à augmenter la pression dans le circuit primaire 12 du maître-cylindre.

Après une course prédéterminée de la tige de poussée 8, le clapet 7 ouvre à l'atmosphère la chambre arrière 3b du servomoteur, préalablement isolée de la chambre avant 3a, et une force d'assistance est appliquée au cylindre mobile 13 par la jupe rigide 4b à travers la bague 20.

La pression hydraulique dans le circuit primaire 12 du maître-cylindre s'élève de façon nette et s'établit, par circulation de fluide hydraulique à travers les passages 16, dans le volume interne 15 du cylindre mobile, faisant ainsi apparaître, sur le piston hydraulique auxiliaire 14, une force de réaction dépendant de la force d'assistance, s'opposant à la force transmise à travers le disque de réaction 23, et permettant le contrôle de la force d'assistance par la force d'entrée.

Comme le montre la figure 1, la cloison mobile 4 est en outre, par l'intermédiaire de sa jupe rigide 4b, montée coulissante sur le piston pneumatique 5 et peut coulisser par rapport à lui en direction du maître-cylindre 2.

Plus précisément, le coulissement relatif s'effectue depuis une position de repos correspondant à la position de repos du servomoteur, telle que représentée sur la figure 1, jusqu'à une position dans laquelle la jupe 4b entraîne le piston pneumatique 5 vers le maître-cylindre suivant la direction axiale D.

Pour ce faire, la jupe 4b et le piston pneumatique 5 présentent par exemple des butées respectives 22a, 22b, en regard l'une de l'autre, permettant à la jupe 4b de n'entraîner le piston pneumatique 5 qu'après une course prédéterminée correspondant à la distance séparant ces butées au repos.

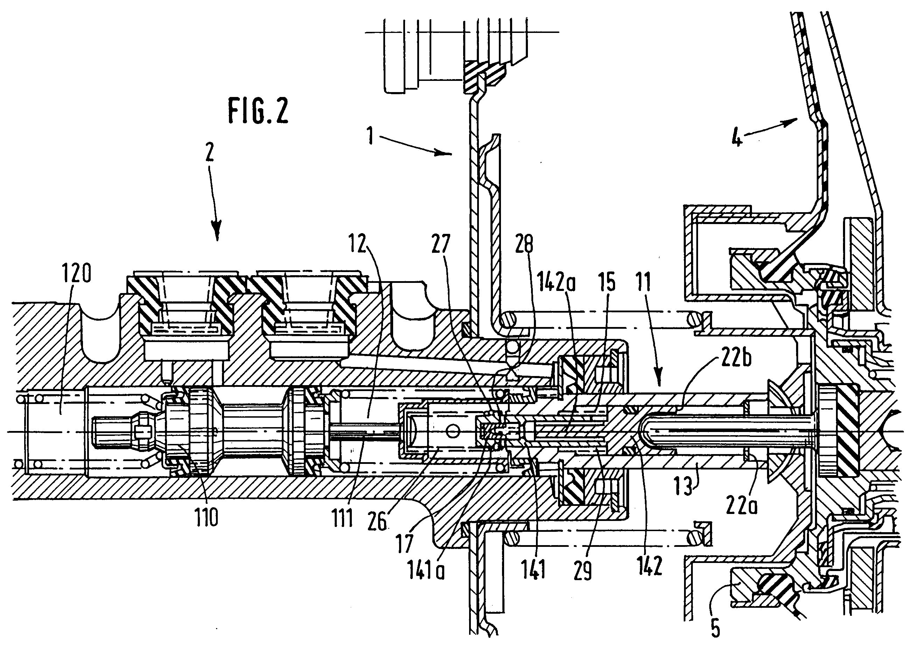

En variante, les butées 22b, 22a peuvent être prévues sur le piston hydraulique auxiliaire 14 d'une part et sur le cylindre mobile 13 d'autre part, comme illustré aux figures 2 à 5.

L'invention concerne un perfectionnement d'un système de freinage tel que décrit, dont le maître-cylindre utilise, en plus du piston hydraulique primaire 11, un piston hydraulique secondaire 110, ce maître-cylindre étant donc doté d'un circuit secondaire 120 en plus du circuit primaire 12, de façon bien connue en soi.

Selon l'invention (figures 2 à 5), le piston hydraulique auxiliaire 14 comprend une partie avant 141 et une partie arrière 142, la partie avant 141 dépassant du cylindre mobile 13 et étant susceptible, en cas de défaillance du circuit primaire 12, d'entraîner mécaniquement le piston hydraulique secondaire 110, par exemple en venant en appui sur la vis 111 de ce dernier.

Dans le mode de réalisation préféré de l'invention, illustré aux figures 2 à 5, la partie avant 141 du piston hydraulique auxiliaire 14 est creuse et coulisse sur un appendice 142a de la partie arrière, et le volume interne 15 du cylindre mobile 13 communique avec le circuit primaire 12 du maître-cylindre au moins à travers une ouverture radiale 141a de la partie avant.

Cette partie avant 141 est sollicitée en direction inverse de la direction axiale D par un premier ressort 26, et présente un épaulement 27 garni d'un joint annulaire 28 dont l'application sur l'extrémité correspondante du cylindre mobile sous l'effet du ressort 26 permet l'obturation sélective de l'ouverture radiale 141a.

Le volume interne 15 du cylindre mobile 13 communique par ailleurs également avec le circuit primaire 12 à travers au moins un clapet anti-retour 17 porté axialement par la partie avant du piston hydraulique auxiliaire 14 et n'autorisant la circulation de fluide hydraulique que dans le sens allant du circuit primaire 12 vers le volume interne 15.

Enfin, un second ressort 29 repousse la partie arrière 142 du piston auxiliaire en direction inverse de la direction axiale D.

Les figures 2 à 5 illustrent divers stades de fonctionnement du dispositif de l'invention.

Dans la position de repos de ce dernier (figure 2), l'ouverture radiale 141a est ouverte, ce qui autorise la purge sous dépression du volume interne 15.

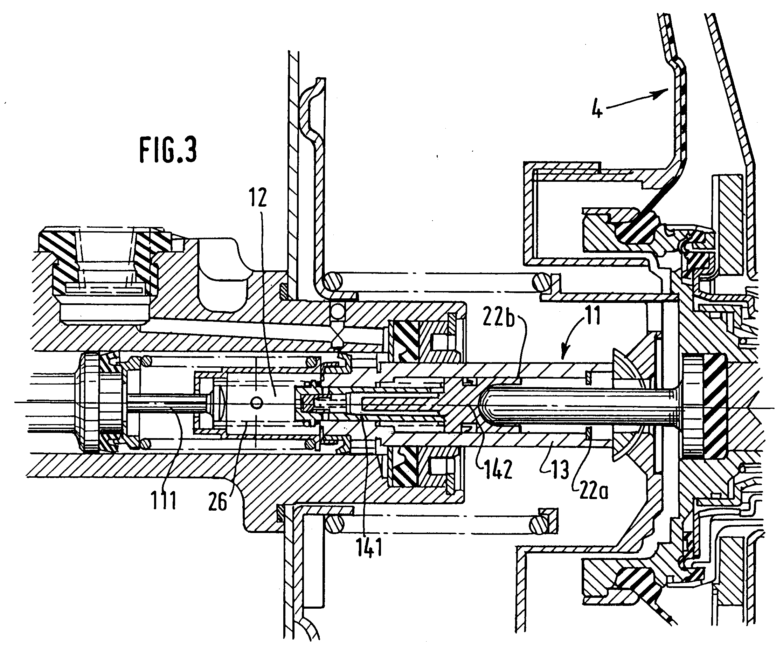

Dès que la jupe 4 avance même légèrement (figure 3), elle emmène avec elle le cylindre mobile 13 qui vient comprimer le joint annulaire 28 sur l'épaulement 27, fermant ainsi le volume interne 15. Le fluide hydraulique peut toutefois continuer à entrer dans ce dernier en passant par le clapet anti-retour 17 sous réserve que la pression dans le circuit primaire 12 soit supérieure à celle qui règne dans le volume interne 15.

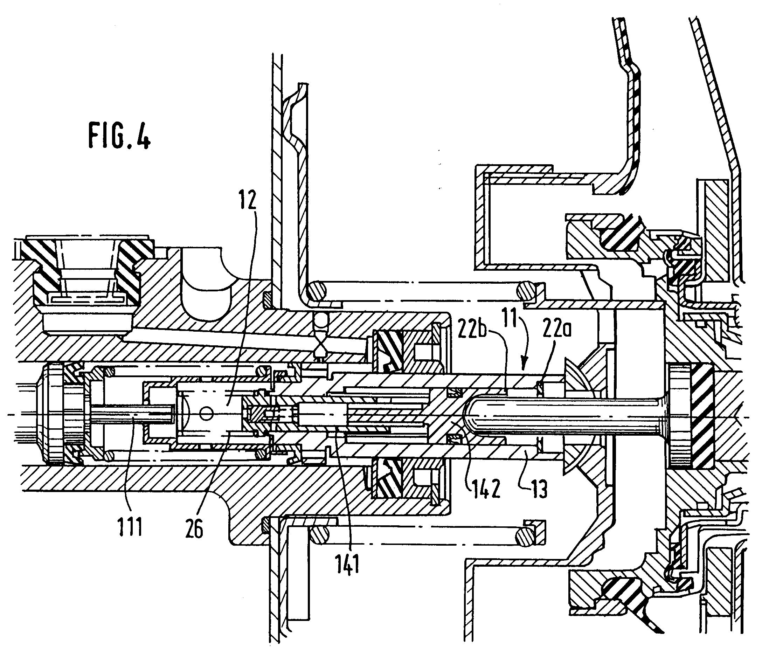

Lorsque la jupe 4 poursuit sa course (figure 4), elle emmène avec elle la partie avant 141 du piston hydraulique auxiliaire par l'intermédiaire du cylindre mobile, le volume interne 15 restant soumis aux mêmes conditions que précédemment.

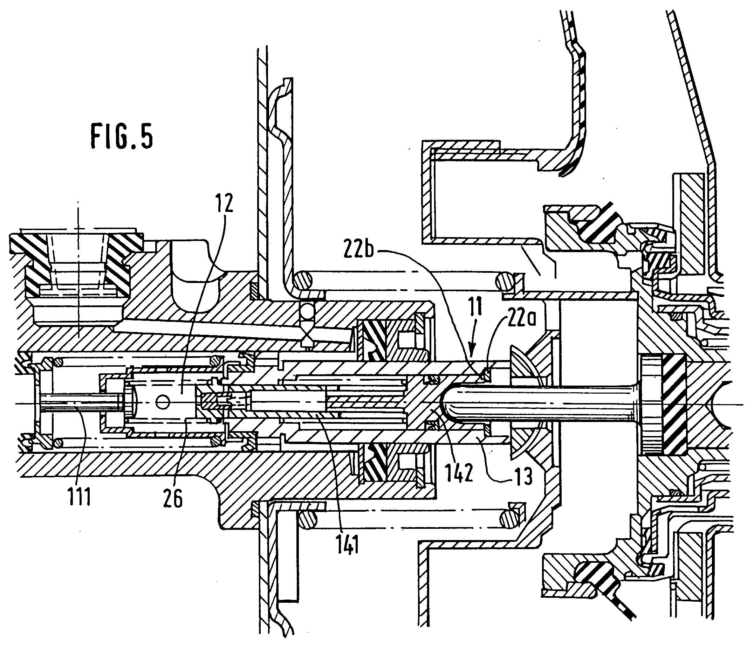

Enfin, à la saturation du servomoteur (figure 5), les positions relatives des différents éléments restent les mêmes, le volume interne 15 ne pouvant se remplir qu'à travers le clapet anti-retour 17, donc à faible débit.

## Revendications

1. Dispositif de freinage assisté pour véhicule à moteur, comprenant d'une part un maître-cylindre (2) doté de circuits primaire et secondaire (12, 120) remplis d'un fluide de freinage, et équipé de pistons hydrauliques primaire et secondaire (11, 110) destinés à recevoir une force d'actionnement se composant d'une force d'entrée et d'une force d'assistance agissant toutes deux suivant une direction axiale (D), et d'autre part un servomoteur pneumatique d'assistance (1) susceptible d'être commandé par application de ladite force d'entrée sur une tige de commande (8) contrôlant l'ouverture d'un clapet (7), pour exercer ladite force d'actionnement sur le piston hydraulique primaire (11) qui en transmet une partie au piston hydraulique secondaire (110), le servomoteur comportant une enveloppe rigide (3) séparée de façon étanche en deux chambres (3a, 3b) au moyen au moins d'une cloison mobile (4), susceptible d'être sollicitée par une différence de pression entre les deux chambres résultant de l'ouverture du clapet et d'entraîner un piston pneumatique (5), mobile par rapport à l'enveloppe et portant ledit clapet, ladite force d'entrée étant transmise par l'intermédiaire d'un disque de réaction (23) sur lequel s'appuie également ledit piston pneumatique pour lui fournir une partie au moins de ladite force d'assistance, le piston hydraulique primaire du maître-cylindre comportant lui-même un cylindre mobile (13), creux, qui communique avec le circuit primaire (12) du maître-cylindre, qui coopère avec la cloison mobile pour recevoir une partie au moins de la force d'assistance communiquée par cette dernière, et à l'intérieur duquel coulisse, de façon étanche et suivant la direction axiale, un piston hydraulique auxiliaire (14) susceptible de recevoir au moins ladite force d'entrée en provenance du disque de réaction, et la cloison mobile (4) étant montée coulissante sur le piston pneumatique (5) de manière à pouvoir coulisser par rapport à lui, sur une course prédéterminée, pour entraîner le cylindre mobile (13) en direction du maître-cylindre, caractérisé en ce que le piston hydraulique auxiliaire (14) comprend une partie avant (141) et une partie arrière (142), la partie avant dépassant du cylindre mobile (13) et étant susceptible d'entraîner mécaniquement le piston hydraulique secondaire (110) en cas de défaillance du circuit primaire (12).

2. Dispositif de freinage suivant la revendication 1, caractérisé en ce que la partie avant (141) du piston hydraulique auxiliaire (14) est creuse et coulisse par rapport à la partie arrière.

3. Dispositif de freinage suivant la revendication 2, caractérisé en ce que le cylindre mobile (13) présente un volume interne (15) communiquant avec le circuit primaire du maître-cylindre au moins à travers une ouverture radiale (141a) de la partie avant, cette ouverture radiale étant sélectivement obturée par un joint annulaire (28) lors de l'application d'un épaulement annulaire (27) de la partie avant sur une extrémité du cylindre mobile, sous l'effet d'un premier ressort (26) sollicitant cette partie avant en direction inverse de la direction axiale (D).

4. Dispositif de freinage suivant la revendication 3, caractérisé en ce que le volume interne du cylindre mobile (13) communique également avec le circuit primaire du maître-cylindre (2) à travers au moins un clapet anti-retour (17) porté axialement par la partie avant du piston hydraulique auxiliaire (14).

## Claims

1. Boosted braking device for motor vehicle, comprising, on the one hand, a master cylinder (2) provided with primary and secondary circuits (12, 120) filled with a brake fluid and equipped with primary and secondary hydraulic pistons (11, 110) intended to receive an actuation force composed of an input force and a booster force both acting in an axial direction (D) and, on the other hand, a pneumatic booster (1) capable of being activated by applying the said input force to a control rod (8) controlling the opening of a valve (7), in order to exert the said actuation force on the primary hydraulic piston (11), which transmits part of it to the secondary hydraulic piston (110), the booster comprising a rigid casing (3) separated in leaktight fashion into two chambers (3a, 3b) by means of at least one movable partition (4) capable of being urged, by a difference in pressure established between the two chambers resulting from the opening of the valve, and of entraining a pneumatic piston (5), capable of moving with respect to the casing, and carrying the said valve, the said input force being transmitted via a reaction disc (23) on which the said pneumatic piston also bears in order to supply it with at least a part of the said booster force, the primary hydraulic piston of the master cylinder itself including a hollow movable cylinder (13) which communicates with the primary circuit (12) of the master cylinder which interacts with the movable partition in order to receive at least part of the booster force imparted by the latter, and inside which there slides, in leaktight fashion and in the axial direction, an auxiliary hydraulic piston (14) capable of receiving at least the said input force coming from the reaction disc, and the movable partition (4) being mounted so that it can slide on the pneumatic piston (5) so that it can slide with respect to it, over a predetermined travel, in order to entrain the movable cylinder (13) in the direction of the master cylinder, characterized in that the auxiliary hydraulic piston (14) comprises a front part (141) and a rear part (142), the front part extending beyond the movable cylinder (13) and being capable of mechanically entraining the secondary hydraulic piston (110) in the event of failure of the primary circuit (12).

2. Braking device according to Claim 1, characterized in that the front part (141) of the auxiliary hydraulic piston (14) is hollow and slides with respect to the rear part.

3. Braking device according to Claim 2, characterized in that the movable cylinder (13) has an internal volume (15) communicating with the primary circuit of the master cylinder at least through one radial opening (141a) in the front part, this radial opening being selectively closed off by an annular seal (28) when an annular shoulder (27) of the front part is applied to one end of the movable cylinder under the effect of a first spring (26) urging this front part in the opposite direction from the axial direction (D).

4. Braking device according to Claim 3, characterized in that the internal volume of the movable cylinder (13) also communicates with the primary circuit of the master cylinder (2) through at least one non-return valve (17) carried axially by the front part of the auxiliary hydraulic piston (14).

## Patentansprüche

1. Bremsunterstützungsvorrichtung für Motorfahrzeuge, mit einem Hauptzylinder (2) einerseits, der mit einem Primär- und einem Sekundärkreis (12, 120) versehen ist, welche mit einer Bremsflüssigkeit befüllt sind, und der einen hydraulischen Haupt- und Nebenkolben (11, 110) aufweist, die dazu bestimmt sind, eine Betätigungskraft aufzunehmen, die sich aus einer Eingangskraft und einer Unterstützungskraft zusammensetzt, welche beide in axialer Richtung (D) wirken, und mit einem pneumatischen Servomotor (1) zur Bremsunterstützung andererseits, welcher durch Aufbringen der Eingangskraft auf eine das Öffnen eines Ventilelements (7) steuernde Steuerstange (8) steuerbar ist, um die Betätigungskraft auf den hydraulischen Hauptkolben (11) auszuüben, der einen Teil davon an den hydraulischen Nebenkolben (110) überträgt, wobei der Servomotor ein starres Gehäuse (3) enthält, das in dichter Weise in zwei Kammern (3a, 3b) mittels zumindest einer beweglichen Wandung (4) unterteilt ist, die durch eine sich aus dem Öffnen des Ventilelements ergebenden Druckdifferenz zwischen den beiden Kammern beaufschlagbar ist und einen pneumatischen Kolben (5) mitnehmen kann, der bezüglich des Gehäuses beweglich ist und das Ventilelement trägt, wobei die Eingangskraft durch eine Reaktionsscheibe (23) übertragen wird, auf der sich auch der pneumatische Kolben abstützt, um dieser zumindest einen Teil der Unterstützungskraft zu übertragen, wobei der hydraulische Hauptkolben des Hauptzylinders selbst einen beweglichen Hohlzylinder (13) enthält, der mit dem Primärkreis (12) des Hauptzylinders in Verbindung steht, mit der beweglichen Wandung zusammenwirkt, um zumindest einen Teil der durch letztere übertragenen Unterstützungskraft aufzunehmen und innerhalb dessen ein hydraulischer Hilfskolben (14) dichtend in axialer Richtung gleitet, der zumindest die von der Reaktionsscheibe stammende Eingangskraft aufnehmen kann, und wobei die bewegliche Wandung (4) gleitend auf dem pneumatischen Kolben (5) angebracht ist, so daß sie relativ zu diesem über einen vorgegebenen Weg gleiten kann, um den beweglichen Zylinder (13) in Richtung zum Hauptzylinder mitzunehmen, dadurch gekennzeichnet, daß der hydraulische Hilfszylinder (14) einen vorderen Teil (141) und ein hinteren Teil (142) enthält, wobei der vordere Teil den beweglichen Zylinder (13) überragt und in der Lage ist, den hydraulischen Nebenkolben (110) im Falle eines Versagens des Primärkreises (12) mechanisch mitzunehmen.

2. Bremsvorrichtung nach Anspruch 1, dadurch gekennzeichnet, daß der vordere Teil (141) des hydraulischen Hilfskolbens (14) hohl ausgeführt ist und bezüglich des hinteren Teils gleitet.

3. Bremsvorrichtung nach Anspruch 2, dadurch gekennzeichnet, daß der bewegliche Zylinder (13) einen Innenraum (15) aufweist, der mit dem Primärkreis des Hauptzylinders zumindest durch eine radiale Öffnung (141a) des vorderen Teils in Verbindung steht, wobei diese radiale Öffnung selektiv durch eine ringförmige Dichtung (28) beim Anliegen einer Ringschulter (27) des vorderen Teils an einem Ende des beweglichen Zylinders unter der Wirkung einer ersten Feder (26) geschlossen wird, die diesen vorderen Teil in zur axialen Richtung (D) entgegengesetzter Richtung beaufschlagt.

4. Bremsvorrichtung nach Anspruch 3, dadurch gekennzeichnet, daß der Innenraum des beweglichen Zylinders (13) ebenfalls mit dem Primärkreis des Hauptzylinders (2) auch durch zumindest ein Rückschlagventil (17) in Verbindung steht, das axial von dem vorderen Teil des hydraulischen Hilfskolbens (14) getragen wird.
